# EUROPEAN PATENT SPECIFICATION

(11) **EP 3 571 560 B1**
(45) Date of publication and mention of the grant of the patent: **02.11.2022**
(21) Application number: 18706853.1
(22) Date of filing: 18.01.2018
(51) Int. Cl.: G05D 1/00

(54) **AUTONOMOUS ROBOTIC SYSTEM**
AUTONOMES ROBOTERSYSTEM
SYSTÈME ROBOTIQUE AUTONOME

(30) Priority: 20.01.2017 PT 2017109871
(43) Date of publication of application: 27.11.2019
(73) Proprietor: Follow Inspiration, S.A., 6230-483 Fundão (PT)
(72) Inventor: INÁCIO DE MATOS, Luís Carlos, 6200-698 Covilhã (PT)
(74) Representative: Ferreira, Maria Silvina
(86) International application number: PCT/IB2018/050317
(87) International publication number: WO 2018/134763

(56) References cited:
- WO-A2-2007/041295
- WO-A2-2008/005660
- US-A1- 2005 096 790

## Description

### Technical Domain

The present application discloses an autonomous robotic system.

### Background

A growing interest in robotics with applications as diverse as industry and service rendering is nowadays observed. There are, however, several challenges yet to be solved ranging from hardware conceptualization and development of software in tasks such as calculating path and obstacle detour, to the most abstract and complex level of human-machine interaction. Some important contributions have already been made, some of which are summarized below.

US20050216126A1 discloses an autonomous personal robot with the ability to identify, track and learn the habits of a particular person in order to detect the occurrence of unusual events. The main purpose of the solution is to help elderly and disabled people and to report their status as well as the status of their environment. This idea differs from that herein presented in several aspects, namely in that it has been designed for a specific user.

The idea proposed in US2006106496A1 describes a method for controlling the movement of a mobile robot. The work focuses on the methods being that the existence of a conventional robot whose structure is not totally defined is assumed. This work differs from that herein proposed essentially in the description of the robot and sensors thereof. While in US2006106496A1 a camera is mentioned, for example, the existence of not only RGB but also depth cameras is herein suggested.

WO2007034434A2 discloses a system for tracking an object or person using RGB video. The video is analyzed through logical processing, using an algorithm of correspondence between blocks. This algorithm defines a pixel block in an image and tries to find the same block, within a certain search region, in the next video image. The search region is dynamically adapted based on the history of the measured values. The tracking algorithm used, however, does not take account of the displacement of the robotic system itself relative to said reference 'object'.

US20110026770A1 discloses a method for using a remote vehicle provided with a stereo vision camera. The camera allows detecting and tracking of a person. The goal of the method is to develop a system that allows humans and remote vehicles to collaborate in real environments. The solution also allows the navigation of the remote vehicle to an appropriate location relative to the person, without, however, providing for the tracking of objects in this context.

The work presented in US2011228976A1 describes techniques for generating synthetic images for the purpose of being used by an automatic learning algorithm for a joint-based tracking system. The present work includes not only a set of algorithms for data and image processing, but also an autonomous robotic system.

US20130342652A1 discloses a tracking method which is generally used to track a person through a robot with an RGB and depth camera. One of the major differences with the invention proposed in the present application is that in addition to the RGB and depth cameras (which are herein admitted to be more than one), the tracking and contouring of obstacles also provides for the use of at least one LRF. Safety can be further enhanced by one or more sonars. WO2014045225A1 discloses an autonomous system for tracking an individual with a capacity to deviate from obstacles, being limited exclusively to this locomotion mode and being unable to autonomously circulate. In addition, the operator recognition is made only on the basis of a depth camera which makes the identification processing itself less robust and subject to failure, in addition, its application being limited to artificial light scenarios (controlled light).

In this way, it is observed that, in practice, the known solutions are omitted in terms of the development of a robotic system that promotes a complete integration with the environment where it is inserted, both at the level of interaction with the user and with the surrounding environment. Another piece of relevant prior art is WO 2007/041295 A2. In comparison to the system described therein, the solution according to the invention allows a better adaptability of the autonomous robotic vehicle to different kinds of mission.

### General Description

The present application arises from the need to make a robotic system more rational and 'conscious' favoring its complete integration in the environment around it.

For this purpose, an autonomous robotic system has been developed with the ability to define its actions according to data coming from 3 different types of 'information sources': sensory information collected directly from the environment where it is inserted, the input provided by its operator and the external context information sent by information systems external to the robotic system. Real-time integration of all these data, coming from different entities, endows the system with an intelligence that allows it to operate according to different operation modes, according to the function assigned thereto, allowing it to operate exclusively following its user or alternatively to move autonomously directly to a particular defined point.

The robotic system developed shall be herein defined according to the technical modules that constitute the same and which create the necessary technical complexity allowing the robotic system to operate according to the principles already mentioned. The modularity of the system herein presented is verified both in terms of software and hardware, in practical terms providing a great advantage since it allows programming different operating functions adapted to certain application scenarios and in that any changes required to system hardware may be implemented without a direct impact on its overall operation. For example, the sensory module can be equipped as a more robust range of sensors if the robotic system is programmed for the user's tracking mode, both in artificial and natural light. The abstraction layer provided by the sensory module favors the integration of the new sensors introduced in the system.

The robotic system is comprised by the following technical modules: sensory module, monitoring module, interaction module, central processing module, power module and locomotion module. This modularity allows for faster processing and greater flexibility in introducing features when needed.

In line with this, the robotic system is equipped with several processing units, at least one per module, to the detriment of a single unit that would necessarily be more complex. Due to the high volume of data involved, for example those provided by the sensory module, as well as the complexity of the analytical and decision algorithms developed, decentralization of processing represents a development approach that favors both the energy requirements while maintaining the consumption within acceptable limits, and the space restrictions that the robotic system is to comply with in order to properly perform its functions within its practical application scenario. In this way, it is possible from the beginning to separate the processing unit destined to treat the sensory data, which represents the computationally more demanding module of the others. Communication between all modules is established through a communication sub-module associated with the processing unit present in each module, which module is configured to establish communication based on the CAN protocol, Ethernet protocol or any other hardware communication protocol.

In spite of this modularity, the whole operation of the robotic system is programmed from the central processing module, where the rational stage is processed that integrates the information sent by the sensory module, interaction module, power module and monitoring module in order to drive the locomotion module, responsible for the displacement of the system.

Next, the modules that define the robotic system shall be described.

### Central Processing Module

This is the main module controlling all other modules of the robotic system.

This is the module where crucial decisions are made regarding the operation mode of the robotic system, in terms of defining its autonomous behaviors such as user tracking (without the need for any identification device therewith), displacement in guiding mode (the user follows the robotic system) or the simple displacement between two points. Regardless of the operation mode in which the robotic system is configured, the central processing module activates the locomotion module by integrating data from the remaining modules. The decision as to which behavior to perform is based on the information collected by the sensory modules - sensors and cameras - and interaction module - receiving a local or remote order from the user or from an external agent, respectively. The processing of all information is performed according to "status" and "behaviors" selection algorithms, such as status machines, Markov models, etc..

Safe navigation of the robotic system (detouring of obstacles and safety distances) means that the central processing module correctly supplies the locomotion system. For this purpose, data coming from the various sensors, that provide information not only complementary but also redundant and that allow the recognition of the surrounding environment, are integrated. In addition, through the interaction module, the central processing module can complement this information with the use of maps implementing algorithms for calculating paths with obstacle detour and/or using global positioning techniques. In effect, it is possible for the central processing module: to generate a path based on a map provided by an external agent; to build maps through local and/or global algorithms based on information collected by the sensory module; to give information to the user about the surrounding environment. For example, to characterize whether he is in a circulation zone or in a parking area; to indicate to a user that he is approaching a narrow passage where the robot will not be able to pass. It may also be possible to indicate to the user where the robot is for the purpose of rendering services (points of interest at airports, advertising or purchase support in the presence of a list).

In this context, it is possible to run artificial intelligence (AI) algorithms in the central processing module which allow the robot to be informed of the user's preferences/history and thus providing effective interactions. For example, in the context of a retail area, depending on the location of the robotic system it is possible to suggest certain products that, depending on the user's shopping profile, may be to his liking.

All examples mentioned are possible thanks to the intercommunication between all modules that constitute the robotic system presented. The effective integration of information assigned to each one of them allows optimizing the operation of the system from the intended function, its user and context information regarding the environment wherein it is inserted.

Resorting to sensory information can also be done by the central processing module to stop the robotic system from moving, forcing an emergency stop due to a nearby obstacle. This stop can also be caused by hardware through a button located on the robot's body.

### Sensory module

The sensory module is responsible for collecting information from the environment where the system is inserted. It is the computationally more complex module because of the data volume it processes. It comprises the following range of sensors:
- at least one distance sensor;
- at least one RGB sensor;
- at least one sonar (with operating frequency in the ultrasound or infrared range);
- at least one sensor with LIDAR technology;
- at least one Laser Range Finder (LRF) sensor.

In addition, the sensory module also includes the display system of the robot. It is comprised by multiple cameras, with dynamic behavior according to the horizontal and vertical axes, of different types:
- RGBD;
- RGB;
- Thermal;
- Stereo, among others.

In order to deal with the volume of sensory data treated herein, this module has a decentralized data processing strategy, having a processing unit per type of sensor/camera to be applied in the robot. Therefore, there is a previous sensory processing step prior to transmitting data to the main processing unit of the module via a hardware communication protocol (of the CAN, profiBUS, EtherCAT, ModBus or Ethernet type, for example) which will integrate all collected information before forwarding it to the central processing module.

The number of sensors/cameras employed is variable depending on the intended application, which will always be mounted on the robot's body, where its precise positioning according to the intended application is varied. For such adaptability to be possible, the sensory module integrates a calibration block that is designed to automatically configure the new installed components, thus creating an abstraction layer that favors the integration thereof in the robotic system.

The combination of different types of sensors/cameras with complementary and also redundant features leads to better performance in terms of obstacle detection and detection and identification of objects and people as well as greater robustness and protection against hardware failure. In fact, the recognition of the surrounding environment - people, obstacles, other robotic systems, zones or markers - is done through image processing algorithms, run in the main processing unit of this module, later forwarding this information to the central processing module that is responsible for triggering the locomotion module accordingly.

As far as the identification of the operator is concerned, the use of sensors complementary to the depth information makes this process more efficient, allowing the use of RGB information, for example in order to extract color characteristics (among others) that allow characterizing the operator more accurately regardless of the lighting characteristics present. In this case, the process of identifying both the user and objects goes through an initial phase of creating a model based on features taken from the depth and color information. New information on the user/object detected at each instant is compared with the existing model and it is decided whether it is the user/object or not based on matching algorithms. The model is adapted over time based on AI and learning algorithms, which allow the adjustment of the visual characteristics of the user/object, over time, during its operation.

It is also possible with the features of this module to recognize actions performed by users that allow, among other applications, a more advanced man-robot interaction. In addition, it is also possible to operate the robotic system in an environment with natural or artificial light due to the presence of RGB and stereo cameras.

### Interaction module

The interaction module is the module responsible for establishing an interface between the robotic system, its user and with agents external to both.

The interaction with the user is processed through:
- at least one microphone;
- at least one monitor;
- at least one speaker,
allowing the interaction to be processed through gestures or voice, for example. In order to support said hardware, image processing algorithms, namely depth and color information (it presupposes that the sensory module has the technical means for such, i.e., at least one sensor for capturing depth information, for example a RGBD type sensor and/or a stereo camera, and at least one RGBD camera, for example for collecting color information) and word recognition are executed in the processing unit associated with this module, allowing the interaction with the user to be done via sound (microphone and/or speakers) or visual manner (through the monitor). This example exposes the interaction and integration between the information collected by all modules comprising the robotic system, and which provide different types of contact with its user or surrounding environment.

In turn, the robotic system is provided with the ability to interact with an external agent, which in this case is considered to be, for example an information server housed in the internet, which the robotic system uses to obtain context information. To this end, this module comprises a sub-module for communicating with the outside configured to operate according to WI-FI, Bluetooth, LAN or IR technologies, for example. In addition, this module allows establishing bidirectional point-to-point connections with other equipment external to the system itself for the following purposes:
- teleoperation of the system through a remote control or station, allowing to receive orders from an external device and sharing therewith monitoring information about the status of the sensors and actuators or status of the processes;
- team operation, through cooperation between robotic systems at different levels - this functionality consists in using the communication capabilities described in the previous point for the exchange of information among the various robots that may be operating in a given scenario. Robots can share all information they have and receive/give orders to others. One may, for example, consider that the robot to be used is always the one with the most battery. In this sense, it is necessary to be acquainted with the battery status of all of them. Another possible application is the optimization of work, where each robot makes a route dependent on the routes of the other robots (it is not worth two robots to pass through the same place each with half load, for example);
- performing automatic or supervised software updates through interconnection to a central command computer.

### Monitoring Module

The monitoring module is intended to monitor the status of all other modules of the robotic system, controlling different parameters associated therewith, such as processor temperature, speed and load of existing processing units; used RAM memory and storage space; engine controller temperature of the locomotion module; speed and position of the robot, power level of the battery etc..

To this end, the monitoring module is connected to each of the other modules of the robotic system, in particular to the respective processing unit, which share information on the parameters mentioned.

### Power Module

The power module comprises at least one battery and a wired and/or wireless charging system. The wired charging system is based on a contact plug that directly connects the power supply to the robot's battery. On the other hand, the wireless charging system is based on the use of electromagnetism (radio signals, electromagnetic waves, or equivalent terms) to transfer energy between two points through the air. There is a fixed transmitter (or several) in the environment and the power module of the robotic system comprises a built-in receiver. When the receiver is close to the transmitter (not necessarily in contact) there is a transfer of energy. This system has advantages over physical connections in high pollution environments (e.g. industry) and in applications where the robot has to be coupled to the charging station autonomously (it simplifies the coupling process because location accuracy is not necessary). The Transmitter and Receiver are essentially constituted by a coil that, on the side of the transmitter is supplied by a variable electric current in the time that will generate a variable electric field. From the receiver side, the electric current generated in the coil is used by excitation based on the magnetic field produced.

The power module is also equipped with processing capacity to control the transmitter and the monitoring of the electric charge on the side of the robotic system, being in interconnection with the other modules of the system, in particular the monitoring modules and central processing module. This interaction between all modules allows, for example, that the robotic system has the notion of the level of electric charge it has at any moment, causing it to be directed to the charging base autonomously whenever necessary.

### Locomotion Module

The locomotion module is responsible for the displacement of the robot. As mentioned, this module is in communication with the central processing module receiving from the later information according to three vectors: speed, direction and orientation. The abstraction layer created at the software level in its processing unit allows different types of steering systems to be adapted by means of respective hardware changes: differential steering, ackermann steering and omnidirectional steering.

### Brief Description of the Figures

For better understanding of the present application, figures representing preferred embodiments are herein attached which, however, are not intended to limit the technique disclosed herein.

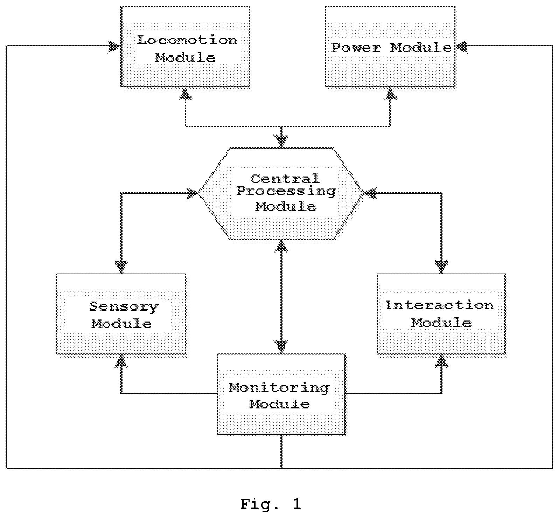

Figure 1 shows the different blocks comprising the developed robotic system as well as the interactions established between them.

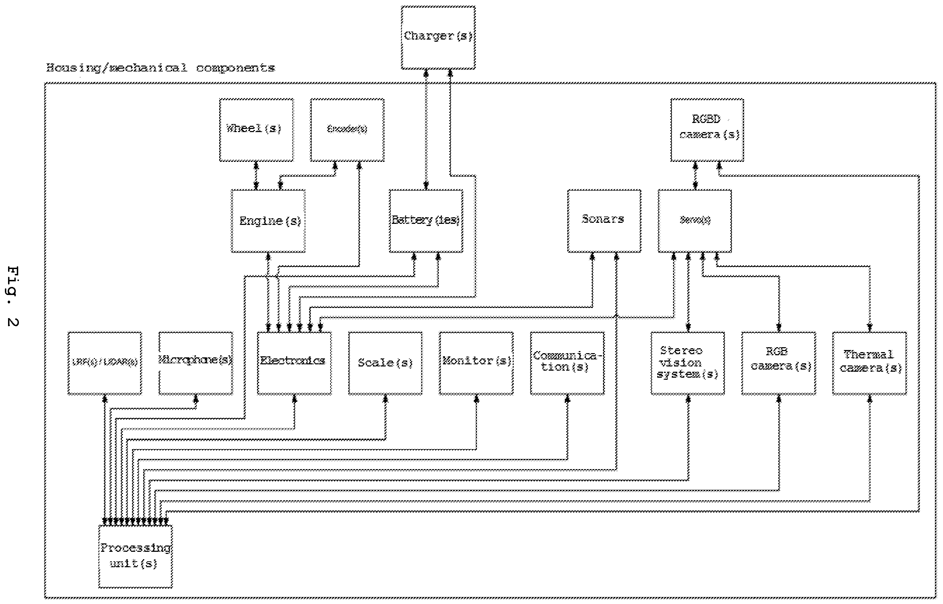

Figure 2 shows a particular embodiment of the robotic system, especially adapted for the application scenario on a retail area, assisting its user.

### Description of the embodiments

With reference to the figures, some embodiments are now described in more detail, which are however not intended to limit the scope of the present application.

A particular embodiment of the autonomous robotic system disclosed herein is intended for the application scenario on a retail area. Taking into account the purpose and specificities defining the application context, the robotic system would be equipped with a scale and a physical support with loading capacity so that it can follow its user carrying the selected products. The navigation inside the commercial area would then be defined according to the user's tracking and depending on the area where the robotic system is located, the system can interact therewith by informing the user about special promotions or special products accessible in that particular area. Alternatively, navigation of the robotic system can be performed from the identification and interpretation of discrete markers which are strategically arranged in the surrounding environment. Depending on the geometric characteristics of the corridor, the robotic system can integrate in its locomotion module an omnidirectional steering system, allowing the robot to move in tighter spaces and in a smoother way. In this scenario, the locomotion module comprises an omnidirectional wheel which is composed of several smaller wheels, wherein these have the axis perpendicular to the main wheel axis. This allows the wheel to engage friction in a specific direction and does not provide resistance to movement in other directions.

In this particular embodiment, the interaction module of the robotic system would access the retail area server in order to download the map of the commercial area where it would navigate, information relating to specific products, promotions and/or preferred data associated with the user, interacting with the later, through the monitor or sound speakers. The three-plane connection, robotic system - user - data server of the retail area, allows the user to create his own shopping list locally by interacting with the robot itself or to upload it directly from his mobile device or from the retail area data server.

Within the framework of rendering of services, the robotic system may comprise an automatic payment terminal, comprising a barcode reader and billing software so that the payment act can also be supported by the robot.

Still within a commercial area or industrial environment, the robotic system can assist with stock replenishment, integrating sensory information, global location and image processing algorithms to identify and upload missing products to a specific location.

Similar applications can be designed for the autonomous robotic system presented herein, such as at airports, for passenger tracking, autonomous carriage of suitcases and passengers between points or provision of information services.

In another application scenario, the robotic system can be integrated into a vehicle, making it autonomous and therefore allowing actions to be performed without the need for driver intervention, such as automatic parking, autonomous driving (based on traffic sign recognition) or remote control of the vehicle itself or of a set of other vehicles in an integrated manner (platooning). To this end, the central control unit of the vehicle is adapted to receive high level orders from the central processing module of the robotic system, connected thereto (position, orientation and speed), wherein the remaining modules of the system - sensory, monitoring and interaction modules - are also tailored to their integration into the vehicle. The locomotion and power modules are those of the vehicle itself, which are also integrated and controlled by the central processing module of the robotic system. In this context, the external agent may be considered the driver of the vehicle itself or a data server configured to communicate with the robotic system providing useful road information or to control the action of the vehicle itself or set of vehicles via a mobile application. The identification of the driver is also possible herein and in the case of the tracking action, the vehicle equipped with the now developed robotic system can be programmed to track another vehicle (for example), the position being detected through the sensory system.

The present description is of course in no way restricted to the embodiments presented herein and a person of ordinary skill in the art may provide many possibilities of modifying it without departing from the general idea as defined in the claims. The preferred embodiments described above are obviously combinable with each other. The following claims further define preferred embodiments.

## Claims

1. Autonomous robotic system comprising
- a central processing module;
- a sensory module comprising
a range of sensors, and
a display system comprising multiple cameras with dynamic behaviour according to the horizontal and vertical axes;
- a monitoring module;
- an interaction module comprising technical means for establishing bidirectional communication between the robotic system, its user and an external agent;
- a power module comprising at least one battery and a charging system;
- a locomotion module configured to operate in accordance with a steering system mounted on the robotic system;
each of said modules comprising at least one processing unit configured to perform data processing operations, said at least one processing unit of each module comprising a communication sub-module configured to establish connections between each of said modules, wherein
the sensory module comprises a calibration block designed to automatically configure new installed components in the range of sensors and display system, is responsible for collecting information from the surrounding environment where the robotic system is inserted, and wherein the combination of the range of sensors and of the multiple cameras comprises complementary and redundant features and
the central processing module being configured to run internal artificial intelligence (AI) algorithms, control the operation of all of said modules of the robotic system, define autonomous behaviors such as a user tracking, displacement in a guiding mode or a simple displacement between two points based on the information collected by the sensory module and the interaction module, said interaction module being configured to
interact with the user through gestures or voice; and to establish bidirectional point-to-point connections with external equipment to
teleoperate the robotic system through a remote control or station, allowing to receive orders from an external device and sharing therewith monitoring information about a status of the range of sensors, an actuator or a process; and ensure a team operation, through a cooperation between robotic systems by exchanging information between various robots operating in a given scenario, receiving or giving orders to each other.

2. System according to claim 1, **characterized by** the multiple cameras of the display system comprising RGBD, RGB, Thermal and Stereo types.

3. System according to claim 1, **characterized by** the range of sensors of the sensory module comprising:
- at least one distance sensor;
- at least one RGB sensor;
- at least one sonar operating on a ultrasound or infrared frequency range;
- at least one sensor with LIDAR technology; and
- at least one Laser Range Finder (LRF) sensor,
wherein each sensor further comprises a processing unit configured to execute sensory processing preceding the communication with the processing unit of the sensory module.

4. System according to any of the preceding claims, wherein the processing unit of the sensory module is configured to run image processing algorithms.

5. System according to claim 1, wherein the monitoring module is configured to communicate with the processing units of each of the remaining modules of the robotic system via a hardware communication protocol in order to monitor parameters such as processor temperature, speed and load; used RAM memory and storage space.

6. System according to claim 5, wherein the monitoring module is configured to determine the temperature of the locomotion engine controller and the speed of the robotic system by means of the connection to the locomotion module thereof.

7. System according to claim 5, wherein the monitoring module is configured to determine the battery level of the robotic system by means of the connection to the power module thereof.

8. System according to claim 1, **characterized by** the interaction module comprising:
- at least one microphone;
- at least one monitor;
- at least one speaker,
- a communication sub-module, configured to establish bidirectional point-to-point communications with external agents, operating according to wireless communication technologies.

9. System according to claim 8, wherein the communication sub-module is configured to operate in accordance with Wi-Fi, Bluetooth, LAN and IR technology.

10. System according to claim 8, wherein the external agent is a data server.

11. System according to claim 1, wherein the locomotion module is configured to operate in accordance with the steering system of the ackermann, differential or omnidirectional type.

12. Method for operating the central processing module of the robotic system as claimed in claims 1 to 11, **characterized by** comprising the steps of:
- establishing bidirectional communication between sensory module, monitoring module, interaction module and locomotion module;
- real-time integration of data from the sensory module, monitoring module and interaction module;
- programing the operation mode of the robotic system, to function in tracking mode, guiding mode or navigation mode between two points;
- sending information to the locomotion module according to three vectors: speed, direction and orientation.

13. Method according to claim 12, **characterized by** the central processing module configures the operation mode of the robotic system according to the processing of information from the sensory module, the interaction module and the monitoring module according to status machine or Markov models algorithms.

14. Method according to claim 13, **characterized by** the information from the interaction module is an input parameter entered by the user via contact in the monitor or sound information via microphone.

15. Method according to claim 13 or 14, **characterized by** the information from the interaction module is sent by an external agent to the robotic system.

16. Method according to claim 12, **characterized by** the tracking mode involving a user identification stage executed in the sensory module which involves the integrated processing of data from depth sensors and RGB cameras.

17. Method according to claim 16, **characterized by** user identification resorts to learning algorithms.

18. Method according to claim 12, **characterized by** the configuration of the guiding and navigation modes between two points involves the connection between the interaction module and the external agent for downloading geographic maps.

## Patentansprüche

1. Autonomes Robotersystem bestehend aus
- einem zentralen Verarbeitungsmodul;
- einem Sensormodul bestehend aus
einer Reihe von Sensoren, und
einem Anzeigesystem bestehend aus mehreren Kameras mit dynamischem Verhalten gemäß den horizontalen und vertikalen Achsen;
- einem Überwachungsmodul;
- einem Interaktionsmodul, das technische Mittel zur Herstellung einer bidirektionalen Kommunikation zwischen dem Robotersystem, dessen Benutzer und einem externen Agenten aufweist;
- einem Leistungsmodul, das mindestens eine Batterie und ein Ladesystem beinhaltet;
- einem Fortbewegungsmodul, das konfiguriert ist, um in Übereinstimmung mit einem, am Robotersystem montierten Lenksystem zu funktionieren;
jedes der genannten Module weist mindestens eine Verarbeitungseinheit auf, die für die Durchführung von Datenverarbeitungsvorgängen konfiguriert ist, wobei mindestens eine Verarbeitungseinheit jedes Moduls ein Kommunikations-Untermodul aufweist, das für den Aufbau von Verbindungen zwischen jedem der besagten Modulen konfiguriert ist,
worin
das Sensormodul aus einem Kalibrierblock besteht, der für die automatische Konfiguration neuer installierter Komponenten im Sensorbereich und im Anzeigesystem ausgelegt ist, sowie für die Erfassung von Informationen aus der Umgebung verantwortlich ist, in der das Robotersystem eingesetzt wird, und worin die Kombination des Sensorbereichs und der mehreren Kameras ergänzende und redundante Merkmale aufweist
und
worin das zentrale Verarbeitungsmodul konfiguriert wird, um interne
Algorithmen der künstlichen Intelligenz (KI) durchzuführen, den Betrieb aller
genannten Module des Robotersystems zu steuern, autonome Verhaltensweisen wie eine Benutzerverfolgung, Verschiebung in einem Führungsmodus oder eine einfache Verschiebung zwischen zwei Punkten auf der Grundlage der vom Sensormodul und dem Interaktionsmodul erfassten Informationen zu definieren, wobei das besagte Interaktionsmodul konfiguriert ist, um
mit dem Benutzer über Gesten oder Stimme zu interagieren und bidirektionale Punkt-zu-Punkt-Verbindungen mit externen Geräten herzustellen, um
das Robotersystem über eine Fernbedienung oder eine Station fernzusteuern, die es ermöglicht, Befehle von einem externen Gerät zu empfangen und damit Überwachungsinformationen über den Status des Sensorbereichs, eines Aktuators oder eines Verfahrens zu teilen und einen Teambetrieb durch eine Zusammenarbeit zwischen Robotersystemen zu gewährleisten, indem Informationen zwischen verschiedenen Robotern ausgetauscht werden, die in einem bestimmten Szenario arbeiten und sich gegenseitig Befehle erteilen oder erhalten.

2. System gemäß Anspruch 1, **gekennzeichnet durch** die mehreren Kameras des Anzeigesystems, das aus RGBD-, RGB-, Thermal- und Stereo-Kameras besteht.

3. System gemäß Anspruch 1, **gekennzeichnet durch** den Sensorbereich des Sensormoduls, der Folgendes umfasst:
- Mindestens einen Abstandssensor;
- mindestens einen RGB-Sensor;
- mindestens einen Sonarsensor, der in einem Ultraschall- oder Infrarot-Frequenzbereich arbeitet;
- mindestens einen Sensor mit LIDAR-Technologie; und
- mindestens einen Laser-Entfernungsmesser (LRF) Sensor, worin jeder Sensor zusätzlich eine Verarbeitungseinheit aufweist, die für die sensorische Verarbeitung konfiguriert ist und der Kommunikation mit der Verarbeitungseinheit des Sensormoduls vorausgeht.

4. System gemäß einem der vorhergehenden Ansprüche, worin die Verarbeitungseinheit des Sensormoduls für die Durchführung von Bildverarbeitungsalgorithmen konfiguriert ist.

5. System gemäß Anspruch 1, worin das Überwachungsmodul konfiguriert ist, um über ein Hardware-Kommunikationsprotokoll mit den Verarbeitungseinheiten jedes der verbleibenden Module des Robotersystems zu kommunizieren, um Parameter wie Prozessortemperatur, Geschwindigkeit und Last, den verwendeten RAM-Speicher und den Speicherplatz zu überwachen.

6. System gemäß Anspruch 5, worin das Überwachungsmodul konfiguriert ist, um die Temperatur der Fortbewegungs-Motorsteuerung und die Geschwindigkeit des Robotersystems mittels der Verbindung zum entsprechenden Fortbewegungsmodul zu bestimmen.

7. System gemäß Anspruch 5, worin das Überwachungsmodul konfiguriert ist, um den Batteriestand des Robotersystems mittels der Verbindung zu dem entsprechenden Leistungsmodul zu bestimmen.

8. System gemäß Anspruch 1, **dadurch gekennzeichnet, dass** das Interaktionsmodul Folgendes beinhaltet:
- Mindestens ein Mikrofon;
- mindestens einen Monitor;
- mindestens einen Lautsprecher,
- ein Kommunikations-Untermodul, das konfiguriert ist, um eine bidirektionale Punkt-zu-Punkt-Kommunikation mit externen Agenten herzustellen, die gemäß den drahtlosen Kommunikationstechnologien arbeiten.

9. System gemäß Anspruch 8, worin das Kommunikations-Untermodul für den Betrieb mit Wi-Fi-, Bluetooth-, LAN- und IR-Technologien konfiguriert ist.

10. System gemäß Anspruch 8, worin der externe Agent ein Datenserver ist.

11. System gemäß Anspruch 1, worin das Fortbewegungsmodul für den Betrieb gemäß dem Ackermann-, Differential- oder Omnidirektionalen Lenksystem konfiguriert ist.

12. Verfahren zum Betrieb des zentralen Verarbeitungsmoduls des Robotersystems gemäß den Ansprüchen 1 bis 11, **dadurch gekennzeichnet, dass** es die folgenden Schritte umfasst:
- Aufbau einer bidirektionalen Kommunikation zwischen dem Sensormodul, Überwachungsmodul, Interaktionsmodul und dem Fortbewegungsmodul;
- Echtzeit-Integration der Daten aus dem Sensormodul, dem Überwachungsmodul und dem Interaktionsmodul;
- Programmierung der Betriebsweise des Robotersystems, um im Tracking-Modus, im Führungsmodus oder im Navigationsmodus zwischen zwei Punkten zu arbeiten;
- Übermittlung von Informationen an das Fortbewegungsmodul in Übereinstimmung mit drei Vektoren: Geschwindigkeit, Richtung und Orientierung.

13. Verfahren gemäß Anspruch 12, **dadurch gekennzeichnet, dass** das zentrale Verarbeitungsmodul den Betriebsmodus des Robotersystems gemäß der Verarbeitung von Informationen aus dem Sensormodul, dem Interaktionsmodul und dem Überwachungsmodul nach Statusmaschinen- oder Markov Modell-Algorithmen konfiguriert .

14. Verfahren gemäß Anspruch 13, **dadurch gekennzeichnet, dass** die Informationen vom Interaktionsmodul einen Eingangsparameter darstellen, der vom Benutzer über den Kontakt im Monitor oder über Klanginformationen über Mikrofon eingegeben wird.

15. Verfahren gemäß Anspruch 13 oder 14, **dadurch gekennzeichnet, dass** die Informationen aus dem Interaktionsmodul durch einen externen Agenten an das Robotersystem gesandt werden.

16. Verfahren gemäß Anspruch 12, **dadurch gekennzeichnet, dass** der Tracking-Modus eine im Sensormodul ausgeführte Stufe der Benutzeridentifikation umfasst, welche die integrierte Verarbeitung von Daten von Tiefensensoren und RGB-Kameras beinhaltet.

17. Verfahren gemäß Anspruch 16, **dadurch gekennzeichnet, dass** die Benutzeridentifikation auf Lernalgorithmen zurückgreift.

18. Verfahren gemäß Anspruch 12, **dadurch gekennzeichnet, dass** die Konfiguration der Führungs- und Navigationsmodi zwischen zwei Punkten, die Verbindung zwischen dem Interaktionsmodul und dem externen Agent zum Herunterladen von geografischen Karten erfordert.

## Revendications

1. Système robotique autonome comprenant
- un module de traitement central ;
- un module sensoriel comprenant
une gamme de capteurs, et
un système d'affichage comprenant de multiples caméras avec une comportement dynamique selon les axes horizontal et vertical ;
- un module de surveillance ;
- un module d'interaction comprenant des moyens techniques pour l'établissement d'une communication bidirectionnelle entre le système robotique, son utilisateur et un agent externe ;
- un module d'alimentation comprenant au moins une batterie et un système de chargement ;
- un module de locomotion configuré pour fonctionner en fonction d'un système de direction monté sur le système robotique ;
chacun parmi lesdits modules comprenant au moins une unité de traitement configurée pour exécuter des opérations de traitement de données, ladite au moins une unité de traitement de chaque module comprenant un sous-module de communication configuré pour établie des connections entre chacun parmi lesdits modules,
dans lequel
le module sensoriel comprend un bloc de calibrage conçu pour configurer automatiquement de nouveaux éléments installés dans la gamme de capteurs et le système d'affichage, est responsable pour la collecte d'informations provenant de l'environnement avoisinant là où le système robotique est intégré, et dans lequel la combinaison de la gamme de capteurs et des plusieurs caméras comprend des caractéristiques complémentaires et redondantes
et
le module de traitement central étant configuré pour exécuter des algorithmes d'intelligence
artificielle (IA) interne, commander le fonctionnement de tous
parmi lesdits modules du système robotique, définir des comportements autonomes tels qu'un suivi de l'utilisateur, un déplacement dans un mode de guidage ou un simple déplacement entre deux points sur base des informations collectées par le module sensoriel et le module d'interaction, ledit module d'interaction étant configuré pour
interagir avec l'utilisateur à travers des gestes ou la voix ; et établir des connexions point à point bidirectionnelles avec un équipement externe pour
faire fonctionner à distance le système robotique à travers une commande ou une station à distance, permettant de recevoir des ordres provenant d'un dispositif externe et partageant ainsi des informations de surveillance à propos d'une situation de la gamme de capteurs, d'un actionneur ou d'un traitement ; et d'assurer un fonctionnement en équipe, à travers une coopération entre des systèmes robotiques par l'échange d'informations entre plusieurs robots fonctionnant dans un scénario donné, recevant ou donnant des ordres entre eux.

2. Système selon la revendication 1, **caractérisé par** les multiples caméras du système d'affichage comprenant des types RGBD, RGB, Thermales et Stéréo.

3. Système selon la revendication 1, **caractérisé par** la gamme de capteurs du module sensoriel comprenant :
- au moins un capteur de distance ;
- au moins un capteur RGB ;
- au moins un sonar fonctionnant sur une gamme de fréquence ultrasonore ou infrarouge ;
- au moins un capteur avec technologie LIDAR ; et
- au moins un capteur Télémètre Laser (LRF), dans lequel chaque capteur comprend en outre une unité de traitement configurée pour effectuer le traitement sensoriel précédant la communication avec l'unité de traitement du module sensoriel.

4. Système selon l'une quelconque des revendications précédentes, dans lequel l'unité de traitement du module sensoriel est configurée pour exécuter des algorithmes de traitement d'images.

5. Système selon la revendication 1, dans lequel le module de surveillance est configuré pour communiquer avec les unités de traitement de chacun parmi les modules restants du système robotique via un protocole de communication de matériel de façon à surveiller des paramètres tels que la température, la vitesse et la charge du processeur ; la mémoire RAM et l'espace de stockage utilisés.

6. Système selon la revendication 5, dans lequel le module de surveillance est configuré pour déterminer la température du dispositif de commande du moteur de locomotion et la vitesse du système robotique au moyen de la connexion au module de locomotion de celui-ci.

7. Système selon la revendication 5, dans lequel le module de surveillance est configuré pour déterminer le niveau de la batterie du système robotique au moyen de la connexion au module d'alimentation de celui-ci.

8. Système selon la revendication 1, **caractérisé par** le module d'interaction comprenant :
- au moins un microphone ;
- au moins un monitor ;
- au moins un haut-parleur,
- un sous-module de communication, configuré pour établir des communications point à point bidirectionnelles avec des agents externes, fonctionnant selon des technologies de communication sans fil.

9. Système selon la revendication 8, dans lequel le sous-module de communication est configuré pour fonctionner en fonction d'une technologie Wi-Fi, Bluetooth, LAN et IR.

10. Système selon la revendication 8, dans lequel l'agent externe est un serveur de données.

11. Système selon la revendication 1, dans lequel le module de locomotion est configuré pour fonctionner en fonction du système de direction du type Ackermann, différentiel ou omnidirectionnel.

12. Procédé de fonctionnement du module de traitement central du système robotique selon les revendications 1 à 11, **caractérisé en ce qu'**il comprend les étapes de :
- l'établissement d'une communication bidirectionnelle entre le module sensoriel, le module de surveillance, le module d'interaction et le module de locomotion ;
- l'intégration en temps réel de données provenant du module sensoriel, du module de surveillance et du module d'interaction ;
- la programmation du mode de fonctionnement du système robotique, pour fonctionner en mode de suivi, en mode de guidage ou en mode de navigation entre deux points ;
- l'envoi d'informations au module de locomotion selon trois vecteurs : vitesse, direction et orientation.

13. Procédé selon la revendication 12, **caractérisé en ce que** le module de traitement central configure le mode de fonctionnement du système robotique selon le traitement d'informations provenant du module sensoriel, du module d'interaction et du module de surveillance selon des algorithmes de modèles de machine d'état ou de Markov.

14. Procédé selon la revendication 13, **caractérisé en ce que** les informations provenant du module d'interaction sont un paramètre d'entrée saisi par l'utilisateur via un contact dans le moniteur ou des informations sonores via un microphone.

15. Procédé selon la revendication 13 ou 14, **caractérisé en ce que** les informations provenant du module d'interaction sont envoyées par un agent externe au système robotique.

16. Procédé selon la revendication 12, **caractérisé par** le mode de suivi impliquant une étape d'identification de l'utilisateur effectuée dans le module sensoriel qui implique le traitement de données intégré provenant de capteurs de profondeur et de caméras RGB.

17. Procédé selon la revendication 16, **caractérisé en ce que** l'identification d'utilisateur a recours à des algorithmes d'apprentissage.

18. Procédé selon la revendication 12, **caractérisé en ce que** la configuration des modes de guidage et de navigation entre deux points implique la connexion entre le module d'interaction et l'agent externe pour le téléchargement de cartes géographiques.
